# EUROPEAN PATENT SPECIFICATION

(11) **EP 3 610 947 B1**
(45) Date of publication and mention of the grant of the patent: **21.04.2021**
(21) Application number: 18189498.1
(22) Date of filing: 17.08.2018
(51) Int. Cl.: B01L 7/00, B01L 3/00

(54) **MICROFLUIDIC SYSTEM FOR DIGITAL POLYMERASE CHAIN REACTION OF A BIOLOGICAL SAMPLE, AND RESPECTIVE METHOD**
MIKROFLUIDISCHES SYSTEM FÜR DIGITALE POLYMERASEKETTENREAKTION EINER BIOLOGISCHEN PROBE UND ZUGEHÖRIGES VERFAHREN
SYSTÈME MICROFLUIDIQUE POUR RÉACTION NUMÉRIQUE EN CHAÎNE PAR POLYMÉRASE D'UN ÉCHANTILLON BIOLOGIQUE ET PROCÉDÉ CORRESPONDANT

(43) Date of publication of application: 19.02.2020
(73) Proprietor: F. Hoffmann-La Roche AG, 4070 Basel (CH); Roche Diagnostics GmbH, 68305 Mannheim (DE)
(72) Inventor: STEINERT, Chris, 6343 Rotkreuz (CH); ZEDER, Michael, 6343 Rotkreuz (CH)
(74) Representative: Bösl, Raphael Konrad

(56) References cited:
- US-A1- 2003 138 819
- US-A1- 2006 094 108
- US-A1- 2009 081 771
- US-A1- 2015 017 709
- US-A1- 2018 221 875
- TSUYOSHI NAKAYAMA ET AL: "Circumventing air bubbles in microfluidic systems and quantitative continuous-flow PCR applications", ANALYTICAL AND BIOANALYTICAL CHEMISTRY, SPRINGER, BERLIN, DE, vol. 386, no. 5, 8 August 2006 (2006-08-08), pages 1327-1333, XP019441137, ISSN: 1618-2650, DOI: 10.1007/S00216-006-0688-7

## Description

### TECHNICAL FIELD

Generally, the present invention relates to the technical field of sample analysis, such as the assay of chemical or biochemical reactions, and more particular to the technical field of high throughput analysis of biological samples. In more detail, the present invention is directed to a microfluidic system for digital polymerase chain reaction (dPCR) of a biological sample. In further detail, such system comprises a microfluidic device with a flow channel in fluid communication with an array of reaction areas, also often referred to as partitions implemented as reaction chambers or reaction vessels, for example in the form of wells or microwells, which are functioning as reaction sites for chemical or biological reactions of at least one biological sample provided therein, respectively, and which system can achieve a desired thermocycling temperature profile in the microfluidic device as fast and as reliable as possible. Further, the present invention relates to a respective method for dPCR of a biological sample in such a microfluidic system.

### BACKGROUND

In the field of diagnostic technology for the assay of chemical or biochemical reactions, it is a goal to be able to carry out multiple different assays on one or more test samples on the same -preferably disposable- microfluidic device, thereby providing methods of independently analyzing one or more test samples with multiple different reagents in the course of a single analytical process. As such test samples, biological samples are usually used, which are often taken from patients by medical personnel for laboratory analysis, e.g. for determining concentration levels of different components within the taken samples. Accordingly, the terms "sample" and "biological sample" refer to material(s) that may potentially contain an analyte of interest, wherein the sample can be derived from any biological source, such as a physiological liquid, including blood, saliva, ocular lens liquid, cerebrospinal liquid, sweat, urine, stool, semen, milk, ascites liquid, mucous, synovial liquid, peritoneal liquid, amniotic liquid, tissue, cultured cells, or the like, wherein the sample can particularly be suspected to contain a certain antigen or nucleic acid.

Most of the known chemical, biochemical and/or biological assays include immobilizing a biological sample as mentioned above within reaction sites, and performing one or more reactions with the immobilized sample material, followed by a quantitative and/or qualitative analytical process. Here, for many biological, biochemical, diagnostic or therapeutic applications, it is essential to be able to accurately determine the amount or concentration of a certain substance or compound in the biological sample, i.e. of the analyte of interest. In order to be able to achieve this goal as accurately as possible, different methods have been developed over the years in this technical field, such as the widely known Polymerase Chain Reaction (PCR) method, which enables the in vitro synthesis of nucleic acids in a biological sample, through which a DNA segment can be specifically replicated, i.e. a cost-effective way to copy or amplify small segments of DNA or RNA in the sample. The development of such methods for amplifying DNA or RNA segments has generated enormous benefits in gene analysis as well as the diagnosis of many genetic diseases, or also in the detection of viral load.

Usually, thermal cycling, also referred to as thermocycling, is utilized to provide heating and cooling of the reactants in the sample within the reaction chamber for amplifying such DNA or RNA segments, wherein laboratory instruments including thermocyclers are commonly used in order to achieve an automatic procedure of diagnostic assays based on PCR, in which, during a PCR conduct, the liquid PCR-samples have to be heated and cooled to differing temperature levels repeatedly and have to be maintained for a certain amount of time at different temperature plateaus. As an example, in the course of a typical PCR conduct, a specific target nucleic acid is amplified by a series of reiterations of a cycle of steps in which nucleic acids present in the reaction mixture are (a) denatured at relatively high temperatures, for example at a denaturation temperature of more than 90 °C, usually about 94 °C to 95 °C, for separation of the double-stranded DNA, then (b) the reaction mixture is cooled down to a temperature at which short oligonucleotide primers bind to the single stranded target nucleic acid, for example at an annealing temperature of about 52 °C to 56 °C for primer binding at the separated DNA strands in order to provide templates (annealing), and, thereafter, (c) the primers are extended/elongated using a polymerase enzyme, for example at an extension temperature at about 72 °C for creation of new DNA strands, so that the original nucleic acid sequence is replicated. Repeated cycles of denaturation, annealing and extension, usually about 25 to 30 repeated cycles, result in the exponential increase in the amount of target nucleic acid present in the sample. Now, in order to be able to accurately maintain such temperature plateaus during thermocycling, a uniform temperature distribution over the reaction zone should be maintained, so that all reaction areas can be heated and cooled uniformly to obtain uniform sample yields between the reaction areas containing the sample. For carrying out a regular PCR method, commonly known thermocycling devices, such as thermal cyclers / thermocyclers, for amplifying DNA segments can be used, which basically consist of a mount for receiving the samples, often also referred to as a sample tempering mount, and a heat pump attached to the mount, which heat pipe is often provided in the form of a combination of a Peltier element used for active heating and cooling of the mount and, thus, for actively controlling the temperature provided to the samples, and a respective heat sink thermally coupled to the Peltier element in order to dissipate the heat away and, for example, into the ambient environment.

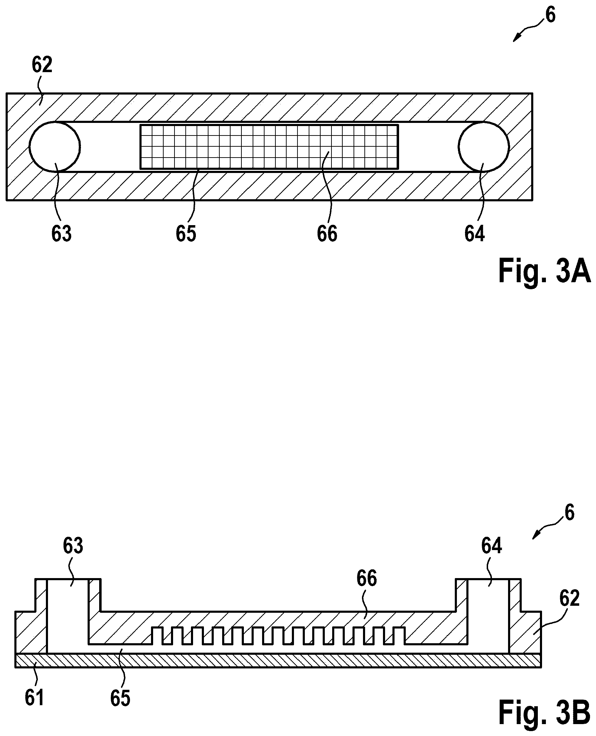

Generally, the basic need exists to keep making diagnostic assays faster, cheaper and simpler to perform, while achieving high precision along with increasing efficiency of conventional laboratory processes. One particular example of the mentioned methods for amplifying DNA or RNA segments -being in the focus of the present invention- is the digital polymerase chain reaction method, also referred to as digital PCR or dPCR, which denotes a biotechnology refinement of the conventional PCR method as described above, and which can be used to directly quantify and clonally amplify nucleic acids including DNA, cDNA or RNA. Here, the substantial difference between dPCR and traditional PCR substantially lies within the method of measuring nucleic acids amounts, since traditional PCR carries out one reaction per single sample, whereas dPCR carries out a single reaction within a sample separated into a large number of partitions provided in a respectively large number of reaction areas, wherein the reaction is carried out in each reaction area individually such that a more reliable collection and sensitive measurement of nucleic acid amounts becomes possible. Accordingly, substantial effort has been made in order to achieve miniaturization and integration of various assay operations, for increasing the number of parallel assays on one single carrier device. As an example of such a single carrier device, microfluidic devices, such as microfluidic chips, have been developed, which provide microscale channels and microscale reaction areas receiving microliter or nanoliter-scale samples in the form of streamable sample liquid, such as aqueous sample liquid. Microliter-scale reagents, typically filled in advance into an array of small wells, i.e. microwells or nanowells provided as reaction areas on the microfluidic chip, are placed therein for contacting a stream of sample liquid streamed through a flow channel, wherein each type of assay is dependent on the reagents loaded into the array of reaction areas as well as the configuration of flow channels and detectors, wherein the filling of sample liquid into the microfluidic chip can be implemented by means of pipetting the sample liquid into the chip. This advanced technology allows a plurality of assays to be carried out simultaneously on a miniaturized scale. Most of these chemical, biochemical and/or biological assays are directed to the immobilization of biological materials such as polypeptides and nucleic acids, cells or tissues within the wells and the performance of one or more reactions with the immobilized material, followed by a quantitative and/or qualitative analytical process, such as luminescence test measurements. For illustrative purposes, fig. 3A shows a top view of an example of a known microfluidic chip 6 in a schematic manner, and fig. 3B shows the chip 6 of fig. 3A in a cross-sectional view along a line A-A in fig. 3A. The microfluidic chip 6 consists of a lower plate 61 and an upper plate 62, i.e. a so-called two-layered microfluidic chip, wherein the upper plate 62 provides an inlet 63 for the introduction of liquid into the chip and an outlet 64 for the exit of liquid out of the chip, and the combination of lower plate 61, i.e. the lower layer of the chip, and upper plate 62, i.e. the upper layer of the chip, establish a flow channel 65 therebetween, the flow channel 65 connecting the inlet 63 to the outlet 64, wherein an array of microwells 66 is provided in the flow channel 65 at its upper side, i.e. at the inner side of the upper plate 62. Here, when filling a sample liquid through the inlet 53 into the flow channel 65 towards the outlet 63, the sample liquid is filled into each member of the array of microwells 62 when streaming the sample liquid along the array of microwells.

However, when actually miniaturizing the reaction chamber volumes to become microfluidic structures of a microfluidic device in order to generate the desired small dimensions, several already known problems increase, such as problems related to the increased surface-to-volume ratio, or undesired sample liquid vaporization, and in particular the undesired generation of gas bubbles within the liquid provided in or streamed through the microfluidic device. Lying in the focus of the present invention, gas bubbles existent in a liquid within a microfluidic structure can constitute a severe problem since gas bubbles circulating through a microfluidic system can -as a side aspect- not only damage the microfluidic structure of any kind of sensor used therein, but mainly can also damage the biological sample of interest due to causing undesired mixing of samples in neighboring microwells, resulting in cross-contamination and, thus, substantial experimental errors and false assay results. For example, gas bubbles can cause experimental errors to chromatography columns by letting reaction components within the reaction areas dry out. Also, gas bubbles can severely affect optical detection of the reaction areas and the reactions occurring therein, potentially resulting in failed assays. In particular when performing dPCR of samples in the microfluidic device, gas bubbles, such as air bubbles, have a tendency to occur frequently, due to several reasons:
(a) during filling of the microfluidic device with sample liquid and separation liquid, gas bubbles can be trapped in the microfluidic device;
(b) during thermocycling, initially trapped gas bubbles (see (a)) can grow due to vaporization of sample liquid; or
(c) new gas bubbles can emerge due to sample vaporization.

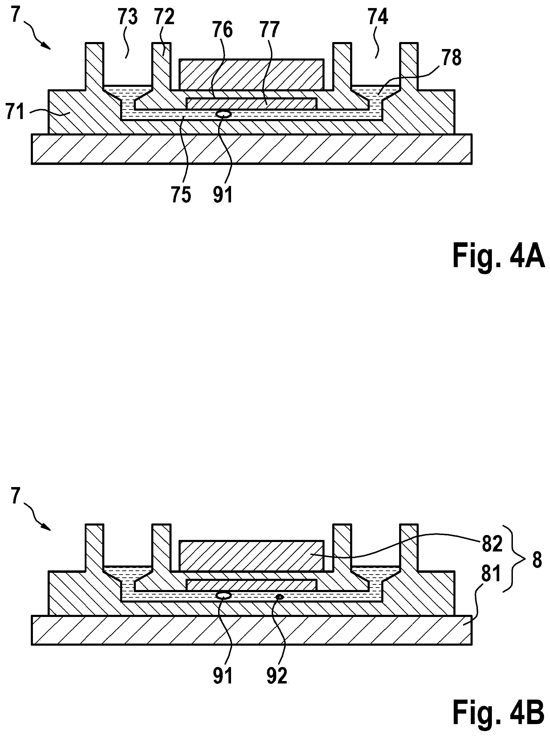

For illustrative reasons regarding the mentioned gas bubble generation and growth, figs. 4A to 4D show a microfluidic chip 7 in a cross-sectional schematic manner, with the chip 7 being inserted into a respective thermocycling appliance, also only shown in a schematic manner. The microfluidic chip 7 has a similar structure as the microfluidic chip 6 of figs. 3A & 3B, i.e. with a lower plate 71 and an upper plate 72, and providing an inlet 73, an outlet 74, and a flow channel 75 connecting the inlet 73 to the outlet 74, wherein an array of reaction areas 76 in the form of microwells is provided in the flow channel 75 at its upper side, i.e. at the inner side of the upper plate 72. Here, the array of reaction areas 76 has already been filled with sample liquid 77, and a sealing liquid 78 has been introduced into the flow channel 75, sealing the sample liquid 77 inside the reaction areas, and filling the flow channel 75 from the inlet 73 to the outlet 74. In order to be able to achieve thermocycling of the microfluidic chip 7, the chip 7 is arranged inside the thermocycling appliance in the form of a so-called plate cycler 8, i.e. a thermal cycler or thermocycler with a bottom heater 81 and a top heater 82 implemented by heatable plates, also referred to as hotplates. In fig. 4A, the microfluidic chip 7 is shown in an unheated state of the heaters 81, 82, wherein a gas bubble 91, for example an air bubble or the like, has been accidentally introduced into the flow channel 75 just below the array of reaction areas 76 during filling of the microfluidic device 7 with sample liquid 77 and/or separation liquid 78.

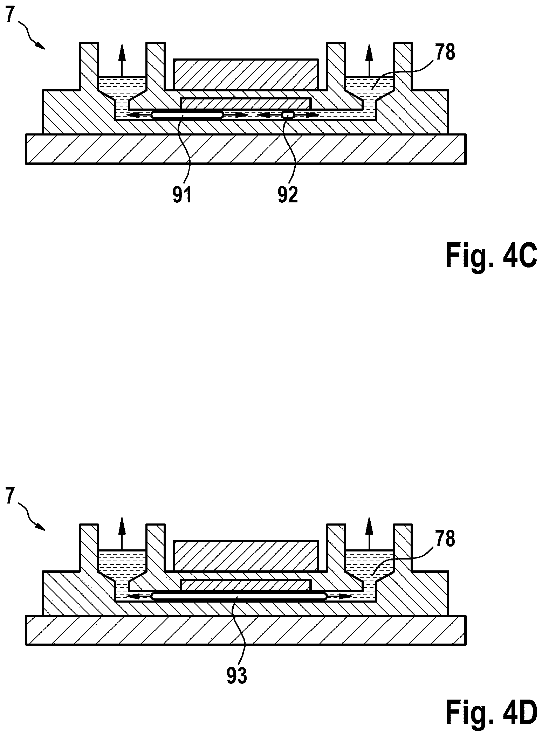

Accordingly, during filling, "initial" gas bubbles 91 might be trapped inside the chip 7, for example within sample liquid inside a microwell, or within sealing liquid provided inside the flow channel of the chip 7. As can be seen in fig. 4B, in which at least the bottom heater 81 has been turned on in order to provide a heating temperature of >50 °C, the already introduced gas bubble 91 is growing due to vaporization of sample liquid 77 inside the array of reaction areas 76. Also, a new gas bubble 92 is generated due to undesired vaporization of sample liquid 77 inside the array of reaction areas 76. Here, the new gas bubble 92 can emerge and grow inside any of the reaction areas during tempering, and can leave the same into the flow channel 75. In fig. 4C, an advancing growth of the gas bubbles 91, 92 due to undesired vaporization of sample liquid 77 can be noticed, wherein the flow channel 75 shows a bubble growth along its extent, such that the growing gas bubbles 91, 92 gradually push the sealing liquid 78 out of the flow channel 75 and, thus, out of the inlet 73 and the outlet 74, here illustrated by respective arrows. Thereby, the growing gas bubbles 91, 92 remove the sealing liquid 78 from the microwells, resulting in that the sample liquid 77 inside the microwells can more easily evaporate. Also, the growing gas bubbles 91, 92 can extend over more than one microwell, i.e. the bubbles 91, 92 can push sealing liquid 78 away from several microwells and, thus, "uncover" these microwells altogether, resulting in that the content of one microwell can pass over into an adjacent microwell. With further proceeding heating by the thermal cycler, the bubbles 91, 92 can further grow, and can also merge to one big gas bubble 93, see fig. 4D, resulting in the fact that the merged and still growing gas bubble 93 gradually pushes the sealing liquid 78 further out of the flow channel 75 and, thus, further out of the inlet 73 and the outlet 74, again illustrated by respective arrows. By means of the development as depicted in figs. 4A to 4D, and with particular view to fig. 4D, it can be clearly gathered that, by undesired gas bubble generation and growth, the sealing liquid 78 is pushed almost completely away from the array of reaction areas 76, thereby annulling the sealing effect provided by the sealing liquid 78. Accordingly, the reaction components in the sample liquid 77 provided inside the array of reaction areas 76 are not further preserved by the sealing liquid 78 and, thus, can dry out. In other words, figs. 4A to 4D show that -during thermocycling- "initial" gas bubbles 91 and new emerging gas bubbles 92 can grow due to vaporization of the sample liquid 77 provided inside the reaction areas 76, wherein gas bubble growth continues until the flow channel 75 and/or the measuring area provided in the form of the array of reaction areas 76 is mostly emptied. Accordingly, cross contamination between adjacent reaction areas can occur due to the removal of the sealing liquid 78 by the gas bubbles 91, 92, 93. Also, the gas bubbles 91, 92, 93 can increase shear stress for the biological sample material inside the reaction areas 76 as cell membranes stretch under the force of the thus generated undesired liquid-air interface. Moreover, as already mentioned before, the gas bubbles can be a substantial problem for optical detection of the reaction areas and the reactions occurring therein, leading substantially to a failed assay which needs to be avoided by all means. Therefore, the removal or avoidance of gas bubbles is a major challenge in the present technical field.

So far, there have been different approaches to solve the problem of gas bubbles in the flow channel of a microfluidic device. As is, for example, described in EP 2 830 769 A1, one solution to the problem of gas bubbles is to prevent gas bubbles getting introduced into the microfluidic device during filling by providing certain microfluidic structures after an inlet, such as the provision of a slit formed along an entire edge of a substrate where fluids can flow from an inlet manifold through the slit, around substantially the entire edge of the substrate, and into a reaction chamber at equalized pressure and without gas bubbles. Here, however, a substantial disadvantage of such a solution is that if such microfluidic structures fail to prevent gas bubbles to enter the microfluidic device, the gas bubble can end up in the reaction chamber and can grow due to vaporization of sample at increased cycling temperature, without any means to remove the entered gas bubble. Also, a new gas bubble can emerge due to vaporization of sample at increased cycling temperatures, resulting in that the dPCR method will fail. Accordingly, even though the provided known solution may be more or less effective for avoiding already existing gas bubbles to enter the microfluidic device, still entered gas bubbles or newly generated gas bubbles can not be handled during thermocycling.

Another solution to the problem of gas bubbles is known from, for example, US 2005/0009101 A1, which describes microfluidic cassettes or devices that can be used to effect a number of manipulations on a sample to ultimately result in target analyte detection or quantification, wherein a light pipe is provided that enables detection of bubbles formed in hybridization fluid or wash buffer, and wherein a roller is provided in functional relationship with a flexible layer, in the sense of a peristaltic interaction, in order to remove any detected bubbles, wherein an elastomeric material of the flexible layer is used as peristaltic-operative material. Accordingly, the provided solution is directed to a kind of squeezing any kind of bubbles out of the microfluidic device, which, however, requires an elastomeric fluidic chip material. Such solution, however, is considered to be not suitable for dPCR chip, since handling and filling of such flexible chip material is ineffective and only imprecise, and surface modifiability as well as optical quality of such material is poor, compared to the usually used inflexible chip materials.

As a further solution to the problem of gas bubbles inside a microfluidic device caused by vaporization of sample liquid, pressure can be applied to the microfluidic device, such as is described in, for example, US 2005/0148066 A1, in which an apparatus for conducting multiple simultaneous micro-volume chemical and bio- chemical reactions in an array format is disclosed. Here, the apparatus is thermal cycled in a thermal cycler with a groove across its surface, so that a thin microhole chip can be inserted into the groove and is thermal cycled, wherein a thin heat-conductive silicone pad can be used to provide thermal contact as well as pressure to the surfaces of the microhole chip in order to prevent vaporization of the samples inside the array and, thus, preventing the generation or growth of gas bubbles. Here, with such a solution, a substantial disadvantage is the higher complexity of the overall instrumental structure as well as the additional structural complexity required by the application of pressure to the chip.

Reference may further be made to the teaching of the following documents: US 2003/0138819 A1 generally relates to assay systems to transport nucleic acids and perform nucleic acid amplification and mentions and mentions sealing a plurality of assay stations by flowing an isolation medium, wherein the assay stations may also have a variety of configurations to prevent the formation of bubbles. US 2009/0081771 A1 relates to a microfluidic system for amplifying a nucleic acid and mentions the presence of a de-bubbler circuit to remove bubbles created by heating a fluorocarbon thermal fluid. TSUYOSHI NAKAYAMA ET AL (DOI: 10.1007/ S00216-006-0688-7) relates to "Circumventing air bubbles in microfluidic systems and quantitative continuous-flow PCR applications" and teaches introducing a fluorinated oil as a cap just before introducing sample solutions into microchannels. Therefore, the general need exists in the technical field of dPCR assay to provide a microfluidic system and respective method for dPCR of a biological sample exhibiting an improved solution for avoiding and/or removing gas bubbles inside the flow channel while maintaining or even improving thermocycling efficiency of the microfluidic system.

### SUMMARY OF THE INVENTION

The inventors of the present invention could confirm that gas bubbles can cause severe problems in regard to successfully completing the thermocycling of the samples, and can, thus, lead to substantial assay failure. It has also been found that the previously proposed solutions are not entirely sufficient or satisfactory in regard to the avoidance of such gas bubbles. In particular, the already proposed solutions in the prior art (see above) were either too costly or not sufficient to generate reproducible test results. Accordingly, the introduction of gas bubbles into a flow channel of a microfluidic device as well as generation of new gas bubbles and gas bubble growth during tempering must be avoided, and a new and improved solution was necessary. Thus, a new and inventive solution was developed by the inventors, basically based on the idea of removing already existing or emerging gas bubbles by "flushing" the microfluidic chip with separation fluid, i.e. with sealing liquid, due to the fact that sealing liquid -when streamed through the flow channel- can reliably flush any gas bubbles through the flow channel and out of the outlet port of a microfluidic chip. Thus, the present invention addresses the above described problems of simplified and more effective avoidance and/or removal of gas bubbles inside a flow channel of a microfluidic device within a microfluidic system, while improving thermocycling efficiency thereof.

According to a first aspect of the present invention, a microfluidic system for dPCR of a biological sample is provided, for example used for assaying biological sample provided in the form of sample liquid, such as a polar aqueous sample solution, to individual reaction areas of an array of reaction areas, wherein the microfluidic system comprises at least one microfluidic device having an inlet, an outlet, a flow channel connecting the inlet to the outlet, and an array of reaction areas in fluidic communication with the flow channel. Here, the microfluidic device can exhibit a structure consisting of at least a top layer and a bottom layer, wherein either the top layer or the bottom layer can provide the array of reaction areas, the inlet and the outlet. The flow channel is established between the top layer and the bottom layer and is in fluid connection with the array of reaction areas which can be implemented in the form of microwells or nanowells, thereby rendering the microfluidic device to be, for example, a microfluidic chip. For example, the width of the entire flow channel, also referred to as lane width, can reside in a range between 6 mm and 7 mm, such as 6.4 mm, which usually provides space in width for about 60 to 100 wells next to each other, i.e. in a lateral direction of the flow channel. Further, the cross-sectional area of an opening of each well can have a circular shape, an oval shape, or a polygonal shape, such as a hexagonal shape. With a polygonal shape of the well opening, and particularly with a hexagonal shape of the well opening, it becomes possible to arrange the well openings to each other with less distance in between, i.e. achieve an increased density of distribution of well openings inside the flow channel. Accordingly, the number of wells in the array of wells of the plate can be further maximized. Moreover, a width of the well opening, including an intermediate space between wells, can be 60 µm ≤ w ≤ 110 µm, such as 62 µm (small well) ≤ w ≤ 104 µm (big well). Further, the microfluidic system comprises a flow circuit connectable to the microfluidic device, for flowing liquid through the flow channel of the microfluidic device, and a sample liquid source connectable to the microfluidic device, for providing the microfluidic device with a sample liquid, for example by means of the flow circuit. As material for the microfluidic device, i.e. for the device layers, materials such as cyclic olefin copolymer (COC), cyclic olefin polymer (COP), or the like can be used, wherein the use of COP is preferable, for example due to cost considerations. Further, the flow circuit can be implemented by means of a tubing system, for example a flexible tubing system consisting of one or several flexible tubes, which tubes can be made of an inner layer of ethylene propylene diene monomer (EPDM) rubber and an outer layer of nitrile butadiene (NBR) rubber, potentially also enforced with a synthetic mesh, or can be generally made of EPDM, NBR, fluorinated ethylenepropylene polymer (FEP), Polytetrafluoroethylene (PTFE), Polyvinyl chloride (PVC), polyethersulfone (PES), fluoroelastomer (FKM), silicone, and can additionally be jacketed by means of a heat isolating material.

Moreover, the microfluidic system of the present invention comprises a primary sealing liquid source connectable to the microfluidic device, for providing the microfluidic device with initial or primary sealing liquid for sealing the sample liquid inside the array of reaction areas, wherein the initial sealing liquid can be an untempered sealing liquid, i.e. an unheated sealing liquid, for example provided at or around ambient temperature. Furthermore, the microfluidic system of the present invention comprises a secondary sealing liquid source connectable to the microfluidic device, for providing the microfluidic device with additional sealing liquid, and a pumping means connected to the flow circuit and adapted to pump the additional sealing liquid through the flow channel. As an example, the pumping means of the present invention can be one of a peristaltic pump, a metering pump or a syringe pump, or, alternatively -with additional fluidic components such as valves or the like- the pumping means of the present invention can be any other type of pump, e.g. a diaphragm pump, a wobble piston pump, a micro gear pump, or the like. Further, as an example of the connectability between the microfluidic device and the connectable components of the microfluidic system of the present invention, the inlet and/or the outlet of the microfluidic device can be implemented in the form of a single connection port, respectively, such as a circular fluidtight port, for example in the form of a Luer Lock adapter or the like, for connection of the microfluidic device with the sample liquid source, for connection of the microfluidic device with the primary sealing liquid source, or for connection of the microfluidic device with the secondary sealing liquid source.

With the above described combination of sealing liquid source and pumping means of the microfluidic system of the present invention, and the possibility of pumping additional sealing liquid through the flow channel, gas bubbles already existing inside the flow channel, or any kind of gas bubbles emerging during thermocycling of the sample inside the microfluidic device, can be removed from the microfluidic device by flushing the flow channel with additional sealing liquid. Accordingly, with the present invention, the negative influence of gas bubbles on the test results can at least be reduced or can be entirely avoided, thereby resulting in a significantly improved microfluidic system.

In other words, the present invention is concerned with the general technical field of PCR using a well plate-based thermocycling structure, with the main focus on endpoint digital PCR. More specifically, the well plate is provided within a microfluidic chip in the form of a microwell plate or even a nanowell plate featuring several thousands of nanowells. Here, the microfluidic chip can be a disposable with the flow channel in the form of a closed filling channel on the side of the openings of the wells that is connected with the macroscopic filling inlet port on one side and an overflow outlet port on the other side. Also, the disposable microfluidic chip may contain more than one array of reaction areas with such a microwell structure and, accordingly, more than one filling channel on the side of the openings. Usually, the microfluidic chip can be prefilled with a so-called PCR-mastermix, mixed with the target mix in form of the sample liquid. Afterwards, the flow channel on the side of the openings of the microwells is being filled with sealing liquid, for example cover oil, in order to prevent the sample liquid in the microwells from evaporating during thermocycling, and to avoid the sample to migrate from well to well. Here, the oil can be filled into the flow channel using, for example, peristaltic pumps applying a pressure of about 500 mbar. Finally, the microfluidic system of the present invention can feature different sensors that perform filling checks, correct placement checks, and the like.

According to a specific embodiment of the dPCR microfluidic system of the present invention, the initial sealing liquid and the additional sealing liquid consist of one and the same sealing liquid material, meaning that any sealing liquid used with the microfluidic system of the present invention can be the same sealing liquid type. Further, any sealing liquid has to be immiscible with the sample liquid. As such immiscible liquid, an oil liquid or a polymer liquid can be used, e.g. a silicone liquid, such as a polydimethylsiloxane (PDMS) liquid, or a mixture of an oil liquid and a polymer liquid. Moreover, the initial sealing liquid and the additional sealing liquid can be provided by different sealing liquid sources, or alternatively by the same sealing liquid source, meaning that the initial sealing liquid source and the secondary sealing liquid source can be implemented by different sealing liquid reservoirs, or alternatively by a common sealing liquid reservoir. Specifically in the case that the initial sealing liquid and the additional sealing liquid consist of one and the same sealing liquid material or type, the primary sealing liquid source and the secondary sealing liquid source can be implemented by one common sealing liquid reservoir, wherein, in this case, the terms "primary" and "secondary" merely refer to the functionality of the common sealing liquid reservoir, i.e. the common sealing liquid reservoir can function as primary sealing liquid source for providing the initial sealing liquid which primarily seals the sample inside the array of reaction areas of the microfluidic device, and can then function as secondary sealing liquid source for providing additional sealing liquid for flushing any gas bubbles out of the flow channel of the microfluidic device. Such configuration can be chosen due to the fact that the complexity of the structure of the microfluidic system can be reduced, compared to the provision of two different sealing liquid reservoirs.

In the context of the dPCR microfluidic system of the present invention, the pumping means is controlled by a control unit to pump the additional sealing liquid through the flow channel on demand, for flushing gas bubbles out of the flow channel. Here, the control unit can be triggered by hand by an operator, or automatically, e.g. based on a feedback signal from an additional system component detecting or monitoring the occurrence of gas bubbles inside the flow channel. Also, the control unit can instruct the pumping means to pump additional sealing liquid through the flow channel based on a predetermined pattern, for example based on the thermocycling steps to be applied to the sample liquid inside the reaction areas. Here, it can be advantageous that the pumping means is controlled to pump a predetermined amount of the additional sealing liquid through the flow channel, wherein the pumping means can be controlled to pump the additional sealing liquid through the flow channel either constantly, intermittently, or upon detection of gas bubbles in the flow channel.

According to a further specific embodiment of the dPCR microfluidic system of the present invention, the microfluidic system can further comprise a bubble trap connected to the flow circuit, for separation of air from sealing liquid, the bubble trap being arranged downstream of the outlet of the microfluidic device. Thereby, any gas bubbles flushed-out of the flow channel of the microfluidic device by means of the streamed additional sealing liquid can be removed from the sealing liquid flowing in the flow circuit. Accordingly, the optional bubble trap can be arranged in the fluid path of sealing liquid as provided by the flow circuit, in order to separate air bubbles from the streamed sealing liquid. Thereby, gas bubbles can immediately be removed from the microfluidic system of the present invention, without the necessity to collect the sealing fluid exiting the microfluidic device and extract any gas bubbles therefrom.

According to another specific embodiment of the dPCR microfluidic system of the present invention, the sample liquid can be an aqueous solution comprising the biological sample and reagents required for the dPCR assay, wherein first the sample liquid can be streamed through the flow channel into the array of reaction areas, in order to fill each reaction area with sample liquid. Afterwards, i.e. after the provision of the sample liquid to the array of reaction areas, the initial sealing liquid is streamed into the flow channel of the microfluidic device, in order to seal the sample liquid inside the reaction areas.

According to a further specific embodiment of the dPCR microfluidic system of the present invention, the microfluidic system can further comprise a detection means for detecting the presence or generation of gas bubbles in the microfluidic device, such as an optical imaging device, for example an optical camera, which can detect and/or monitor the presence or generation of gas bubbles inside the flow channel before and during thermocycling, provided that the flow channel allows an optical monitoring. Here, for example, the inside of the flow channel can be made visible from the outside, for example by means of a viewing window, transparent walls of the flow channel, or the like. Accordingly, the detection means can be used to provide a feedback signal indicating the occurrence of gas bubbles inside the flow channel, wherein the control unit can be triggered based on such feedback signal. Thus, with such a structure, the microfluidic system can work automatically, without the necessity of an operator monitoring the microfluidic device during thermocycling or the like.

In order to be able to provide the sample material inside the reaction areas with a thermocycling temperature profile, the microfluidic system can comprise a thermal mount receiving the microfluidic device, for providing a thermocycling temperature profile to the array of reaction areas. For example, a thermal structure as described in correlation with any one of figs. 4A to 4D can be used, i.e. a so-called plate cycler can accommodate the microfluidic device of the microfluidic system of the present invention. Alternatively, the provision of a thermocycling temperature profile to the array of reaction areas can be implemented by means of a heating and/or cooling means for heating and/or cooling of the temperature of the additional sealing liquid to a desired thermocycling temperature profile temperature. Thus, the desired thermocycling temperature profile of the content of the reaction areas can be implemented not by application of heat by means of an external heat source in thermal connection with the microfluidic device, but by means of a respectively heated or cooled sealing liquid being streamed through the flow channel of the microfluidic device, i.e. a new way of application of heat to the sample material while being able to flush out any kind of gas bubbles within the flow channel. Thus, with such a solution, not only gas bubble removal but also heating and/or cooling of the biological sample inside the reaction areas from within the microfluidic device can be achieved. Accordingly, also a more direct and faster application of a thermocycling temperature profile onto the biological samples can be achieved, wherein the usually known external components, such as a top heater and a bottom heater, can be omitted, thus simplifying the known structure of a thermocycling appliance. Here, in order to achieve such a temperature control from within the microfluidic device instead of an external application of heat, there are several options, which can be combined with each other, if desired, which options can include the following:
(a) the secondary sealing liquid source comprises a reservoir with non-heated additional sealing liquid, wherein a flow-type heating means is provided downstream of the reservoir, for heating the additional sealing liquid on demand, i.e. for heating the sealing liquid streaming through the flow-type heating means when required by the thermocycling temperature profile, which flow-type heating means can be implemented in the form of a tempering means provided around a part of the flow circuit coming from the sealing liquid reservoir, a connected flow heater or the like;
(b) the secondary sealing liquid source comprises at least one reservoir with heated additional sealing liquid and at least one reservoir with non-heated or cooled additional sealing liquid, wherein the reservoirs can be separably connected to the flow circuit by means of a respective valve mechanism or the like, such as an electronically controlled delivery valve, or the reservoirs can be connected to the flow circuit by means of a mixing valve, for mixing heated additional sealing liquid and non-heated or cooled additional sealing liquid in order to achieve the desired temperature of the sealing liquid to be provided to the microfluidic device;
(c) the additional sealing liquid comprises electrically conductive material, such as graphene material, for heating the additional sealing liquid by the appliance of electricity onto the additional sealing liquid on demand.

When using one of (a) and (b), or a combination thereof, the pumping means must be adapted to be able to follow the desired dPCR cycles, i.e. place the respectively tempered additional sealing liquid over the sample array and again away from it, and pump any amount of additional sealing fluid through the flow channel in order to remove gas bubbles. In case of using option (c), i.e. in case the sealing liquid is heated electrically, the liquid should be an electrically conductive liquid which provides a suitable resistance so that it heats up during the current flow. Here, a graphene solution is suitable for such application. In such case, however, the sealing liquid can not be cooled down electrically; instead, either the reservoir or the microfluidic chip itself must be cooled in case the sample temperature during dPCR needs to decrease. Furthermore, if the electrical heating solution is applied, a circular sealing liquid system could be used, without the necessity of reservoirs, which would require a precise control of the dPCR cycles, for example by means of a comprehensive sensor structure monitoring the temperatures and currents in real-time.

According to a further specific embodiment of the dPCR microfluidic system of the present invention, the microfluidic system can additionally comprise a pressure chamber surrounding at least the microfluidic device. Here, the functionality of such an additional pressure chamber can add to the already achieved avoidance or removal of gas bubbles occurring inside the microfluidic system of the present invention, thereby further ensuring that gas bubbles cannot disturb the assay results. For the thermocycling itself, the disposable microfluidic device including the oil filled ports can thus be set under pressure of 1 to 2 bar, for example around 1.5 bar, in order to further suppress bubble generation during thermocycling. Here, the pressure is preferably applied onto the inside of the microfluidic device by arranging the entire microfluidic device inside the pressure chamber.

According to a further specific embodiment of the present invention, the inventive device can further comprise at least one sensor for controlling the temperature at the biological samples received in the microfluidic device, wherein such sensor can be a temperature sensor, for example in combination with a fluid flow sensor. Thus, by providing a respective sensor at any of the components of the inventive microfluidic system, the temperature of the biological samples during dPCR can be monitored closely, and the heating/cooling function of the microfluidic system can be controlled based on the measured temperature values of the samples, in order to regulate the different temperature plateaus of the dPCR accurately and efficiently. Accordingly, such sensor(s), for example temperature sensors, enable a precise control of the thermocycling temperature by a control algorithm or the like, wherein temperature sensors, and other sensors are used to control the respective heating/cooling rate, wherein the heating/cooling power can be significantly varied by changing fluid pumping speed.

According to another aspect of the present invention, a method for dPCR of a biological sample in a microfluidic system as described above is provided, the method comprising a step of streaming a sample liquid through the flow channel of the microfluidic device, in particular provided in the form of a microfluidic chip, and filling the array of reaction areas with the sample liquid in a successive manner by pushing the sample liquid through the flow channel, a subsequent step of streaming an initial sealing liquid through the flow channel of the microfluidic device, for sealing each reaction area after the same has been filled with the sample liquid, and for pushing remaining sample liquid out of the microfluidic device, a step of applying a thermocycling temperature profile to the array of reaction areas, and a step of pumping additional sealing liquid through the flow channel of the microfluidic device, for flushing gas bubbles out of the flow channel. Here, the step of applying a thermocycling temperature profile to the array of reaction areas and the step of pumping additional sealing liquid through the flow channel of the microfluidic device, for flushing gas bubbles out of the flow channel, can be provided in the course of a combined step, i.e. in case the application of a temperature to the array of reaction areas is achieved by means of pumping heated additional sealing liquid through the flow channel, wherein the pumping of the additional sealing liquid results in heating the sample liquid inside the reaction arrays and, at the same time, flushing gas bubbles out of the flow channel. Further preferably, the dPCR method of the present invention also comprises a step of assaying the biological sample provided in the array of reaction areas, thereby rendering the method to be an analysis method based on dPCR.

In accordance with a specific further embodiment, the step of pumping additional sealing liquid through the flow channel can comprise pumping a predetermined amount of additional sealing liquid through the flow channel on demand, wherein the step of pumping additional sealing liquid through the flow channel can either be a step of pumping additional sealing liquid through the flow channel constantly or a step of pumping additional sealing liquid through the flow channel intermittently, for example only when the sample liquid inside the reaction areas need to be tempered, and/or a step of pumping additional sealing liquid through the flow channel upon detection of gas bubbles in the flow channel. Here, with the possibility of pumping additional sealing liquid through the flow channel on demand, already existing gas bubbles inside the flow channel, or any kind of gas bubbles emerging during thermocycling of the sample inside the microfluidic device can be removed from the microfluidic device by flushing the flow channel with additional sealing liquid. Accordingly, with the method of the present invention, the negative influence of gas bubbles on the test results can at least be reduced or can be entirely avoided, thereby resulting in a significantly improved method for dPCR of a biological sample in the inventive microfluidic system.

According to a specific embodiment of the dPCR method of the present invention, the method can further comprise a step of monitoring and detecting the presence or generation of gas bubbles in the microfluidic device, for example by means of the detection means, e.g. in the form of an optical camera or the like, which can detect and/or monitor the presence or generation of gas bubbles inside the flow channel before and during thermocycling, provided that the flow channel allows an optical monitoring, i.e. the inside of the flow channel being visible from the outside, e.g. by means of a viewing window, transparent walls of the flow channel, or the like. Accordingly, the detection means can be used to provide a feedback signal indicating the occurrence of gas bubbles inside the flow channel, wherein the control unit can be triggered based on such feedback signal, resulting in a feedback-controlled dPCR method. Alternatively or additionally, the inventive method can further comprise a step of separating gas bubbles from the additional sealing liquid, for example by means of the bubble trap connected to the flow circuit downstream of the outlet of the microfluidic device. Thereby, any gas bubble flushed out of the flow channel of the microfluidic device by means of the streamed additional sealing liquid can be removed from the sealing liquid flowing inside the flow circuit. Accordingly, the optional step of separating gas bubbles from the additional sealing liquid by means of the bubble trap arranged in the fluid path of sealing liquid can be useful to immediately remove gas bubbles from the microfluidic system of the present invention, without the necessity to collect the sealing fluid exiting the microfluidic device and extract any gas bubbles therefrom at a later stage. Alternatively or additionally, the inventive method can also comprise a step of applying pressure onto the microfluidic device, for example by means of a pressure chamber surrounding at least the microfluidic device. The functionality of such an additional pressure applying step can add to the already achieved avoidance or removal ability of the inventive dPCR method, thereby further ensuring that gas bubbles do not disturb the test results. Hereby, the microfluidic device can be set under pressure of 1 to 2 bar, for example around 1.5 bar, in order to further suppress bubble generation during thermocycling, wherein the pressure can be applied onto the inside of the microfluidic device, either by applying pressure to a side wall of the flow channel acting as a flexible pressure transmitting component, or by means of applying pressure on the entire microfluidic device which, in such case, needs to exhibit a certain compressibility.

According to a specific embodiment of the dPCR method of the present invention, the step of applying a thermocycling temperature profile to the array of reaction areas can comprise a step of controlling the temperature profile of a thermal mount receiving the microfluidic device, for providing a thermocycling temperature profile to the array of reaction areas, or -alternatively- a step of controlling a heating and/or cooling means for heating and/or cooling of the sealing liquid temperature to a desired thermocycling temperature profile temperature. Here, the step of controlling a heating and/or cooling means can include one of the following options:
(a) a step of controlling a flow-type heating means provided downstream of the secondary sealing liquid source, for heating the additional sealing liquid on demand;
(b) a step of controlling a valve mechanism for mixing additional sealing liquid from at least one reservoir with a heated additional sealing liquid and at least one reservoir with a non-heated or cooled additional sealing liquid;
(c) a step of applying electricity onto the additional sealing liquid on demand, the additional sealing liquid comprising electrically conductive material, such as graphene material, for heating the additional sealing liquid by the appliance of electricity;
(d) a combination of any of the previously mentioned optional steps (a) to (c).

The above described microfluidic system of the present invention as well as the respective inventive method can be part of an automated processing system, such as an analytical, pre-analytical or post-analytical processing system, which is commonly employed in state-of-the-art laboratories for automatically processing biological samples, which can encompass any apparatus or apparatus component operable to execute one or more processing steps / workflow steps on one or more biological samples, and covers analytical instruments, pre-analytical instruments, and also post-analytical instruments. The expression "processing steps" thereby refers to physically executed processing steps, such as conducting the particular steps of a dPCR conduct. The term "analytical" as used herein encompasses any process step carried out by one or more laboratory devices or operative units which are operable to execute an analytical test on one or more biological samples. In the context of biomedical research, analytical processing is a technical procedure to characterize the parameters of a biological sample or of an analyte. Such characterization of parameter comprises, for example, the determination of the concentration of particular proteins, nucleic acids, metabolites, ions or molecules of various sizes in biological samples derived from humans or laboratory animals, or the like. The gathered information can be used to evaluate e.g. the impact of the administration of drugs on the organism or on particular tissues. Further analyses may determine optical, electrochemical or other parameters of the biological samples or the analytes comprised in the sample material.

The above described method steps can be controlled by the control unit of the described microfluidic system, which can also control any kind of actuation or monitoring of the above described microfluidic system and its components, wherein the term "control unit" as used herein encompasses any physical or virtual processing device, such as a CPU or the like, which can also control an entire laboratory instrument or even an entire workstation comprising one or more laboratory instruments in a way that workflow(s) and workflow step(s) are conducted. The control unit may, for example, carry different kinds of application software and instruct the automated processing system or a specific instrument or device thereof to conduct pre-analytical, post analytical and analytical workflow(s)/ workflow step(s). The control unit may receive information from a data management unit regarding which steps need to be performed with a certain sample. Further, the control unit might be integral with a data management unit, may be comprised by a server computer and/or be part of one instrument or even distributed across multiple instruments of the automated processing system. The control unit may, for instance, be embodied as a programmable logic controller running a computer-readable program provided with instructions to perform operations. Here, in order to receive such instructions by a user, a user interface can additionally be provided, wherein the term "user interface" as used herein encompasses any suitable piece of application software and/or hardware for interactions between an operator and a machine, including but not limited to a graphical user interface for receiving as input a command from an operator and also to provide feedback and convey information thereto. Also, a system / device may expose several user interfaces to serve different kinds of users / operators.

As used herein and also in the appended claims, the singular forms "a", "an", and "the" include plural reference unless the context clearly dictates otherwise. Similarly, the words "comprise", "contain" and "encompass" are to be interpreted inclusively rather than exclusively; that is to say, in the sense of "including, but not limited to". Similarly, the word "or" is intended to include "and" unless the context clearly indicates otherwise. The terms "plurality", "multiple" or "multitude" refer to two or more, i.e. 2 or >2, with integer multiples, wherein the terms "single" or "sole" refer to one, i.e. =1. Furthermore, the term "at least one" is to be understood as one or more, i.e. 1 or >1, also with integer multiples. Accordingly, words using the singular or plural number also include the plural and singular number, respectively. Additionally, the words "herein," "above,", "previously" and "below" and words of similar import, when used in this application, shall refer to this application as a whole and not to any particular portions of the application.

The description of specific embodiments of the present invention is not intended to be exhaustive or to limit the disclosure to the precise form disclosed. While the specific embodiments of, and examples for, the present disclosure are described herein for illustrative purposes, various modifications are possible within the scope of the invention defined by the appended claims, as those skilled in the relevant art will recognize. Specific elements of any foregoing and later described embodiments can be combined or substituted for elements in other embodiments. Also, in drawings, same reference numerals denote same elements to avoid repetition, and parts readily implemented by one of ordinary skill in the art may be omitted. Furthermore, while advantages associated with certain embodiments of the disclosure have been described in the context of these embodiments, other embodiments may also exhibit such advantages, and not all embodiments need necessarily exhibit such advantages to fall within the scope of the disclosure as defined by the appended claims.

The following examples are intended to illustrate specific embodiments of the present invention. As such, the specific implementations as discussed hereinafter are not to be construed as limitations on the scope of the present invention. It will be apparent to the person skilled in the art that various changes, and modifications may be made without departing from the scope of the present invention as defined by the appended claims. Further aspects and advantages of the present invention will become apparent from the following description of particular embodiments illustrated in the figures.

### BRIEF DESCRIPTION OF THE DRAWINGS

- Figure 1: is a conceptual illustration of a microfluidic system for dPCR of a biological sample according to a first embodiment of the present invention in cross-section;
- Figure 2: is a conceptual illustration of a microfluidic system for dPCR of a biological sample according to a second embodiment of the present invention in cross-section;
- Figures 3A & 3B: are schematic structural illustrations of a microfluidic system known in the art in top view and cross-sectional view; and
- Figures 4A to 4D: show different stages in a dPCR with schematic functional illustrations of the growth and the generation of gas bubbles inside a microfluidic system known in the art.

### LIST OF REFERENCE NUMERALS

- **1**: microfluidic system (1^{st} emb.)
- **1'**: microfluidic system (2^{nd} emb.)
- **2**: microfluidic device
- **21**: lower plate / bottom layer of the microfluidic device
- **22**: upper plate / top layer of the microfluidic device
- **23**: microfluidic device inlet
- **231**: microfluidic device inlet cover
- **24**: microfluidic device outlet
- **241**: microfluidic device outlet cover
- **25**: microfluidic device flow channel
- **26**: array of reaction areas / wells
- **27**: sample liquid (filled in the reaction areas)
- **28**: initial sealing liquid
- **29**: additional sealing liquid
- **3**: flow circuit
- **31**: pump
- **32**: bubble trap
- **4**: secondary sealing liquid source
- **41**: tempered reservoir
- **411**: electronically controlled delivery valve
- **42**: non-tempered reservoir
- **421**: electronically controlled delivery valve
- **5**: flow heater
- **6**: microfluidic chip
- **61**: lower plate / bottom layer of the microfluidic chip
- **62**: upper plate / top layer of the microfluidic chip
- **63**: microfluidic chip inlet
- **64**: microfluidic chip outlet
- **65**: microfluidic chip flow channel
- **66**: array of microwells
- **7**: microfluidic chip
- **71**: lower plate / bottom layer of the microfluidic chip
- **72**: upper plate / top layer of the microfluidic chip
- **73**: microfluidic chip inlet
- **74**: microfluidic chip outlet
- **75**: microfluidic chip flow channel
- **76**: array of reaction areas / wells
- **77**: sample liquid (filled in the reaction areas)
- **78**: sealing liquid
- **8**: plate cycler
- **81**: bottom heater of the plate cycler
- **82**: top heater of the plate cycler
- **91**: initial gas bubble
- **92**: new emerging gas bubble
- **93**: merged gas bubble

### DETAILED DESCRIPTION

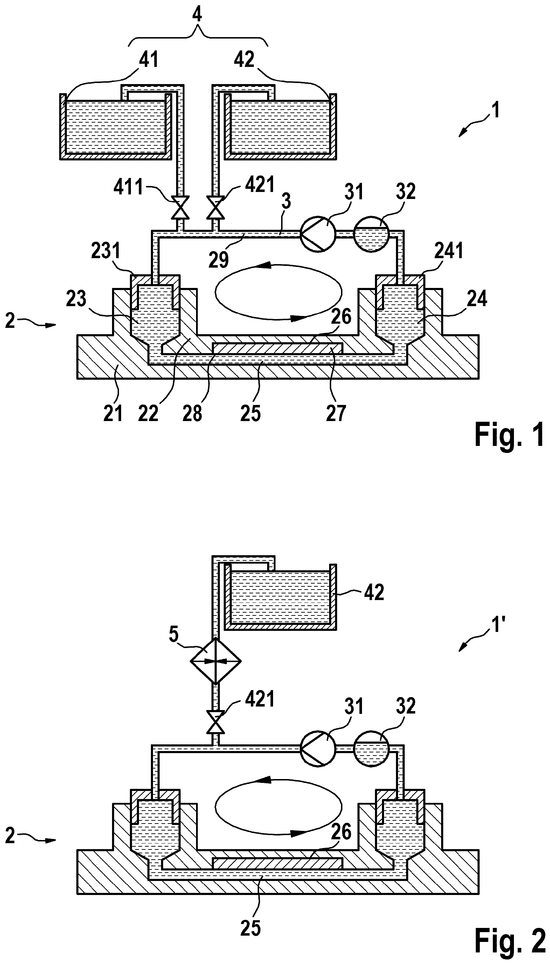

Fig.1 shows a microfluidic system 1 for dPCR of a biological sample according to a first embodiment of the present invention in a schematic illustration, with the main components provided either in illustrative cross-section or as pictogram. The microfluidic system 1 as illustrated in fig. 1 includes a microfluidic device 2 in the form of a microfluidic chip, the device 2 showing a similar structure as the state-of-the-art chip 7 depicted in fig. 3B, wherein the device 2 substantially consists of a lower plate 21 and an upper plate 22, and provides an inlet 23, an outlet 24, and a flow channel 25 connecting the inlet 23 to the outlet 24. Furthermore, an array of reaction areas 26 in the form of microwells or nanowells is provided in the flow channel 25 at its upper side, i.e. at the inner side of the upper plate 22 in order to be able to monitor the reactions in the reaction areas 26 from above. Moreover, in the shown state, the microfluidic device 2 has already been flushed with sample liquid 27 which is filled in the array of reaction areas 26, i.e. which should be filled into each single microwell of the array of reaction areas 26. Such filling of the sample liquid 27 into the array of reaction areas 26 can be undertaken at a filling station (not shown), previously to arranging the microfluidic device 2 inside the microfluidic system 1, wherein the (not shown) filling station is considered to be part of the microfluidic system 1, used for introduction of sample liquid 27 into the array of reaction areas 26. Also, initial sealing liquid 28 has already been filled into the microfluidic device 2, which seals the sample liquid 27 inside the array of reaction areas 26, which filling of the initial sealing liquid 28 into the flow channel 25 in order to seal the array of reaction areas 26 can also be undertaken at the (not shown) filling station, previous to arranging the microfluidic device 2 inside the microfluidic system 1. Alternatively, the filling of the initial sealing liquid 28 into the flow channel 25 in order to seal the array of reaction areas 26 can also have been carried out by means of the microfluidic system 1 itself, by means of the additional sealing liquid 29, wherein the part of the additional sealing liquid 29 which actually seals the sample liquid 29 inside the array of reaction areas 26 is to be understood as "initial" sealing liquid 28. Here, since the filling station is connectable to the microfluidic device 2 for providing the microfluidic device 2 with sample liquid 27, the (not shown) filling station can be considered to be a sample liquid source as well as a primary sealing liquid source, as connectable combined functional part of the microfluidic system 1.

The microfluidic system 1 further comprises a flow circuit 3 connected to the microfluidic device 2, wherein the flow circuit 3 is used for flowing additional sealing liquid 29 through the flow channel 25 of the microfluidic device 2, and mainly for flowing the additional sealing liquid 29 through the flow channel 25 of the microfluidic device 2. Here, the flow of additional sealing liquid 29 is illustrated by means of an arrow circle turning counter-clockwise. The additional sealing liquid 29 originates substantially from a secondary sealing liquid source 4 consisting of a tempered reservoir 41 comprising heated additional sealing liquid 29 and a non-tempered reservoir 42 comprising non-heated or cooled additional sealing liquid 29, wherein the reservoirs 41, 42 are connected to the flow circuit 3 by a respective electronically controlled delivery valve 411, 421. Thus, by controlling the delivery valve 411, heated additional sealing liquid 29 can be introduced into the flow circuit 3, and by controlling the delivery valve 421, non-heated additional sealing liquid 29 can be introduced into the flow circuit 3, thereby resulting in a desired temperature profile of the additional sealing liquid 29 inside the flow circuit 3. Alternatively, the tempered reservoir 41 and the non-tempered reservoir 42 can share a common mixing valve, which is then connected to the flow circuit 3, functioning in the sense of a mixing faucet, such that already premixed and, thus, accordingly tempered additional sealing liquid 29 is introduced into the flow circuit 3, ready to be provided to the microfluidic device 2.

Now, in order to provide the additional sealing liquid 29 to the flow channel 25, a peristaltic pump 31 functioning as pumping means of the microfluidic system 1 is provided as part of the flow circuit 3, for pumping the additional sealing liquid 29 to the microfluidic device 2, through its inlet 23 through the flow channel 25 and out of the outlet 24, thereby not only providing heat or cold to the array of reaction areas 26 for thermocycling of the samples inside the array of reaction areas 26, but also achieving a flushing of any gas bubbles, if occurring inside the flow channel 25, out of the flow channel 25 and the outlet 24, i.e. out of the microfluidic device 2. Here, the pump 31 can constantly pump the additional sealing liquid 29 through the flow channel 25, or can pump the additional sealing liquid 29 through the flow channel 25 intermittently, for example only when the sample liquid 27 inside the array of reaction areas 26 needs to be tempered. Thus, with the possibility of pumping additional sealing liquid 29 through the flow channel 25 on demand, already existing gas bubbles inside the flow channel 25, or any kind of gas bubbles emerging during thermocycling of the sample liquid 27, can be removed from the microfluidic device 2 by flushing the flow channel 25 with additional sealing liquid 29. In order to be able to finally remove any gas bubbles from the entire flow system, the microfluidic system 1 further comprises a bubble trap 32 arranged downstream of the outlet 24 of the microfluidic device 2 and, in the present embodiment, arranged before the pump 31, wherein the bubble trap 32 is used to separate any gas bubbles from the streamed additional sealing liquid 29. Thereby, gas bubbles, if any, can immediately be removed from the microfluidic system 1. Accordingly, any negative influence of gas bubbles on the test results can at least be reduced or can be entirely avoided.

In fig. 2, a second embodiment of a microfluidic device 1' of the present invention is depicted, which basically consists of a similar structure as described in regard to the first embodiment as shown in fig. 1. Here, same reference numerals denote same elements, and the respective description is omitted to avoid repetition. In contrast to the first embodiment, however, the microfluidic device 1' only comprises the non-tempered reservoir 42 comprising non-heated additional sealing liquid 29, wherein a flow heater 5 is provided downstream of the reservoir 42, for tempering the non-tempered reservoir 42 in accordance with a desired thermocycling temperature profile to be applied onto the samples inside the array of reaction areas 26. Here again, the reservoir 42 is connected to the flow circuit 3 by a respective electronically controlled delivery valve 421, wherein, by controlling the delivery valve 421, respectively temperature-adjusted additional sealing liquid 29 can be introduced into the flow circuit 3 and can be pumped by the pump 31 into the microfluidic device 2, in order to not only provide the desired thermocycling temperature profile to the samples inside the array of reaction areas 26 but also, and most importantly, to flush out any gas bubbles occurring inside the flow channel 25.

According to an alternative embodiment, the structure of the previously described embodiment as shown in fig. 2 but without the flow heater 5 can be applied to a plate cycler 8 as know in the art and described in connection with any one of figs. 4A to 4D, with the plate cycler 8 having the microfluidic device 2 provided therein. Thereby, the provision of a desired thermocycling temperature profile to the sample liquid 27 inside the array of reaction areas 26 can be established by the plate cycler 8, and the pumping of non-heated additional sealing liquid 29 is used only for the removal of gas bubbles inside the flow channel 25, if any. Furthermore, according to another alternative embodiment, the structure of the embodiment as shown in fig. 2 can be applied, without a flow heater 5 or without a plate cycler 8, but wherein the additional sealing liquid 29 comprises electrically conductive graphene material, for heating the additional sealing liquid 29 by the appliance of electricity onto the additional sealing liquid 29 on demand, thereby achieving heating of the additional sealing liquid 29 in order to be able to apply a desired thermoycling temperature profile to the sample material inside the array of rection areas 26 without the necessity of any kind of external heater or heated reservoir.

While the current invention has been described in relation to its specific embodiments, it is to be understood that this description is for illustrative purposes only. Accordingly, it is intended that the invention be limited only by the scope of the claims appended hereto.

## Claims

1. A microfluidic system (1; 1') for digital polymerase chain reaction dPCR of a biological sample, the microfluidic system (1; 1') comprising:
at least one microfluidic device (2) having an inlet (23), an outlet (24), a flow channel (25) connecting the inlet (23) to the outlet (24), and an array of reaction areas (26) in fluidic communication with the flow channel (25);
a flow circuit (3) connectable to the microfluidic device (2), for flowing liquid through the flow channel (25) of the microfluidic device (2);
a sample liquid source connectable to the microfluidic device (2), for providing the microfluidic device (2) with a sample liquid (27);
a primary sealing liquid source connectable to the microfluidic device (2), for providing the microfluidic device (2) with initial sealing liquid (28) for sealing the sample liquid (27) inside the array of reaction areas (26);
a secondary sealing liquid source (4) connectable to the microfluidic device (2), for providing the microfluidic device (2) with additional sealing liquid (29), and
a pumping means (31) connected to the flow circuit (3) and adapted to pump said additional sealing liquid (29) through the flow channel (25), **characterized in that** the microfluidic system further comprises a control unit configured to control the pumping means (31) to pump said additional sealing liquid (29) through the flow channel (25) on demand, for flushing gas bubbles out of the flow channel (25).

2. The microfluidic system (1; 1') of claim 1, wherein the sample liquid (27) is an aqueous solution comprising said biological sample and reagents required for dPCR assay, and wherein any sealing liquid (28, 29) is one of oil and a polymer liquid, such as a silicone liquid, or a mixture thereof, thereby rendering the sealing liquid (28, 29) to be an immiscible liquid, preferably wherein the initial sealing liquid (28) and the additional sealing liquid (29) consist of the same sealing liquid material.

3. The microfluidic system (1; 1') of claim 1 or 2, wherein the primary sealing liquid source and the secondary sealing liquid source (4) are implemented by different sealing liquid reservoirs, or by a common sealing liquid reservoir, preferably wherein the initial sealing liquid (28) is an untempered sealing liquid.

4. The microfluidic system (1; 1') of any one of the preceding claims, wherein the pumping means (31) is controlled to pump a predetermined amount of said additional sealing liquid (29) through the flow channel (25), preferably wherein the pumping means (31) is controlled to pump said additional sealing liquid (29) through the flow channel (25) constantly, intermittently, or upon detection of gas bubbles in the flow channel (25).

5. The microfluidic system (1; 1') of any one of the preceding claims, wherein the microfluidic system (1; 1') further comprises a bubble trap (32) connected to the flow circuit (3), for separation of gas from sealing liquid (28, 29), the bubble trap (32) being arranged downstream of the outlet (24) of the microfluidic device (2).

6. The microfluidic system (1; 1') of any one of the preceding claims, wherein the microfluidic system (1; 1') is usable for assaying said biological sample provided in the form of said sample liquid (27) to each member of the array of reaction areas (26).

7. The microfluidic system (1; 1') of any one of the preceding claims, wherein the inlet (23) and/or the outlet (24) are implemented in the form of a connection port for connection of the microfluidic device (2) with the sample liquid source, for connection of the microfluidic device (2) with the primary sealing liquid source, and/or for connection of the microfluidic device (2) with the secondary sealing liquid source (4).

8. The microfluidic system (1; 1') of any one of the preceding claims, wherein the microfluidic device (2) is structured with at least a bottom layer (21) and a top layer (22), wherein either said bottom layer (21) or said top layer (22) provides the array of reaction areas (26), the inlet (23) and the outlet (24), and wherein the flow channel (25) is established between said bottom layer (21) and said top layer (22) and is in fluid connection with the array of reaction areas (26), preferably wherein each reaction area is a microwell or a nanowell, further preferably wherein the microfluidic device (2) is a microfluidic chip.

9. The microfluidic system (1; 1') of any one of the preceding claims, wherein the microfluidic system (1; 1') is configured to first stream the sample liquid (27) through the flow channel (25) into the array of reaction areas (26), and wherein the microfluidic system (1; 1') is configured to stream the initial sealing liquid (28) into the flow channel (25) of the microfluidic device (2) after the provision of the sample liquid (27) to the array of reaction areas (26).

10. The microfluidic system (1; 1') of any one of the preceding claims, wherein the microfluidic system (1; 1') further comprises a detection means for detecting the presence or generation of gas bubbles in the microfluidic device (2), preferably wherein the detection means is an optical imaging device, further preferably an optical camera.

11. The microfluidic system (1; 1') of any one of the preceding claims, wherein the microfluidic system (1; 1') further comprises a thermal mount receiving the microfluidic device (2), for providing a thermocycling temperature profile to the array of reaction areas (26).

12. The microfluidic system (1; 1') of any one of claims 1 to 10, wherein a provision of a thermocycling temperature profile to the array of reaction areas (26) is implemented by means of a heating and/or cooling means for heating and/or cooling of sealing liquid temperature to a desired thermocycling temperature profile temperature, and wherein
the secondary sealing liquid source (4) comprises a reservoir (42) with non-heated additional sealing liquid (29), wherein a flow-type heating means (5) is provided downstream of the reservoir (42), for heating the additional sealing liquid (29) on demand; and/or
the secondary sealing liquid source (4) comprises at least one reservoir (41) with heated additional sealing liquid (29) and at least one reservoir (42) with non-heated or cooled additional sealing liquid (29), said reservoirs (41, 42) being separably connected to the flow circuit (3) by a valve mechanism (411, 421), such as a respective electronically controlled delivery valve (411, 421) or a common mixing valve; and/or
the additional sealing liquid (29) comprises electrically conductive material, such as graphene material, for heating the additional sealing liquid (29) by the appliance of electricity onto the additional sealing liquid on demand.

13. The microfluidic system (1; 1') of any one of the preceding claims, wherein the microfluidic system (1; 1') further comprises a pressure chamber surrounding at least the microfluidic device (2).

14. A method for digital polymerase chain reaction dPCR of a biological sample in a microfluidic system (1; 1') according to any one of the preceding claims, the method comprising:
a step of streaming a sample liquid (27) through the flow channel (25) of the microfluidic device (2), in particular provided in the form of a microfluidic chip, and filling the array of reaction areas (26) with the sample liquid (27) in a successive manner by pushing the sample liquid (27) through the flow channel (25);
a step of streaming an initial sealing liquid (28) through the flow channel (25) of the microfluidic device (2) for sealing each reaction area of the array of reaction areas (26) after the same has been filled with the sample liquid (27), and for pushing remaining sample liquid (27) out of the microfluidic device (2),
a step of applying a thermocycling temperature profile to the array of reaction areas (26), and
a step of pumping additional sealing liquid (29) through the flow channel (25) of the microfluidic device (2), for flushing gas bubbles out of the flow channel (25).

15. The method of claim 14, wherein the step of pumping additional sealing liquid (29) through the flow channel (25) comprises pumping a predetermined amount of additional sealing liquid (29) through the flow channel (25) on demand, preferably wherein the step of pumping additional sealing liquid (29) through the flow channel (25) is a step of pumping additional sealing liquid (29) through the flow channel (25) constantly or a step of pumping additional sealing liquid (29) through the flow channel (25) intermittently, and/or a step of pumping additional sealing liquid (29) through the flow channel (25) upon detection of gas bubbles in the flow channel (25).

16. The method of claim 14 or 15, wherein the method further comprises:
a step of monitoring and detecting the presence or generation of gas bubbles in the microfluidic device (2), preferably by means of a detection means, such as an optical imaging device, for example an optical camera; and/or
a step of separating gas bubbles from the additional sealing liquid (29), preferably by means of a bubble trap (32) connected to the flow circuit (3) downstream of the outlet (24) of the microfluidic device (2); and/or
a step of applying pressure onto the microfluidic device (2), preferably by means of a pressure chamber surrounding at least the microfluidic device (2); and/or
a step of assaying the biological sample provided in the array of reaction areas (26).

17. The method of any one of claims 14 to 16, wherein the step of applying a thermocycling temperature profile to the array of reaction areas (26) comprises:
a step of controlling the temperature profile of a thermal mount receiving the microfluidic device (2), for providing a thermocycling temperature profile to the array of reaction areas (26); or
a step of controlling a heating and/or cooling means for heating and/or cooling of sealing liquid temperature to a desired thermocycling temperature profile temperature.

18. The method of claim 17, wherein the step of controlling a heating and/or cooling means (5) comprises:
a step of controlling a flow-type heating means (5) provided downstream of the secondary sealing liquid source (4), for heating the additional sealing liquid (29) on demand; and/or
a step of controlling a valve mechanism (411, 421) for mixing additional sealing liquid (29) from at least one reservoir (41) with a heated additional sealing liquid (29) and at least one reservoir (42) with a non-heated or cooled additional sealing liquid (29); and/or
a step of applying electricity onto the additional sealing liquid (29) on demand, the additional sealing liquid (29) comprising electrically conductive material, such as graphene material, for heating the additional sealing liquid (29) by the appliance of electricity.

## Patentansprüche

1. Mikrofluidisches System (1; 1') zur digitalen Polymerase-Kettenreaktion dPCR einer biologischen Probe, wobei das mikrofluidische System (1; 1') Folgendes aufweist:
mindestens eine Mikrofluidikvorrichtung (2) mit einem Einlass (23), einem Auslass (24), einem den Einlass (23) mit dem Auslass (24) verbindenden Strömungskanal (25) und einer Anordnung von Reaktionsbereichen (26), die mit dem Strömungskanal (25) in Fluidverbindung stehen;
einen Strömungskreislauf (3), der mit der Mikrofluidikvorrichtung (2) verbindbar ist, um Flüssigkeit durch den Strömungskanal (25) der Mikrofluidikvorrichtung (2) fließen zu lassen;
eine Probenflüssigkeitsquelle, die an die Mikrofluidikvorrichtung (2) anschließbar ist, um die Mikrofluidikvorrichtung (2) mit einer Probenflüssigkeit (27) zu versorgen;
eine Primärabdichtungsflüssigkeitsquelle, die mit der Mikrofluidikvorrichtung (2) verbindbar ist, um die Mikrofluidikvorrichtung (2) mit initialer Abdichtungsflüssigkeit (28) zum Versiegeln der Probenflüssigkeit (27) innerhalb der Anordnung von Reaktionsbereichen (26) zu versorgen;
eine Sekundärabdichtungsflüssigkeitsquelle (4), die an die Mikrofluidikvorrichtung (2) anschließbar ist, um die Mikrofluidikvorrichtung (2) mit zusätzlicher Abdichtungsflüssigkeit (29) zu versorgen, und
eine Pumpeinrichtung (31), die mit dem Strömungskreislauf (3) verbunden und angepasst ist, die zusätzliche Abdichtungsflüssigkeit (29) durch den Strömungskanal (25) zu pumpen,
**dadurch gekennzeichnet, dass** das mikrofluidische System ferner eine Steuereinheit umfasst, die gestaltet ist, um die Pumpeinrichtung (31) zu steuern, um bei Bedarf die zusätzliche Abdichtungsflüssigkeit (29) durch den Strömungskanal (25) zu pumpen, um Gasblasen aus dem Strömungskanal (25) zu spülen.

2. Mikrofluidisches System (1; 1') nach Anspruch 1, wobei die Probenflüssigkeit (27) eine wässrige Lösung ist, die die biologische Probe und die für eine dPCR-Prüfung erforderlichen Reagenzien aufweist, und wobei jede Abdichtungsflüssigkeit (28, 29) entweder Öl oder eine Polymerflüssigkeit, wie zum Beispiel eine Silikonflüssigkeit, oder ein Gemisch davon ist, wodurch die Abdichtungsflüssigkeit (28, 29) zu einer nicht mischbaren Flüssigkeit gemacht wird, wobei die initiale Abdichtungsflüssigkeit (28) und die zusätzliche Abdichtungsflüssigkeit (29) vorzugsweise aus demselben Abdichtungsflüssigkeitsmaterial bestehen.

3. Mikrofluidisches System (1; 1') nach Anspruch 1 oder 2, wobei die Primärabdichtungsflüssigkeitsquelle und die Sekundärabdichtungsflüssigkeitsquelle (4) durch unterschiedliche Abdichtungsflüssigkeitsreservoire oder durch ein gemeinsames Abdichtungsflüssigkeitsreservoir umgesetzt sind, wobei die initiale Abdichtungsflüssigkeit (28) vorzugsweise eine nicht temperierte Abdichtungsflüssigkeit ist.

4. Mikrofluidisches System (1; 1') nach einem der vorhergehenden Ansprüche, wobei die Pumpeinrichtung (31) so gesteuert wird, dass sie eine vorbestimmte Menge an zusätzlicher Abdichtungsflüssigkeit (29) durch den Strömungskanal (25) pumpt, wobei die Pumpeinrichtung (31) vorzugsweise so gesteuert wird, dass sie die zusätzliche Abdichtungsflüssigkeit (29) konstant, intermittierend oder bei Erfassung von Gasblasen im Strömungskanal (25) durch den Strömungskanal (25) pumpt.

5. Mikrofluidisches System (1; 1') nach einem der vorhergehenden Ansprüche, wobei das mikrofluidische System (1; 1') ferner eine mit dem Strömungskreislauf (3) verbundene Blasenfalle (32) zur Abtrennung von Gas aus der Abdichtungsflüssigkeit (28, 29) aufweist, wobei die Blasenfalle (32) stromabwärts des Auslasses (24) der Mikrofluidikvorrichtung (2) angeordnet ist.

6. Mikrofluidisches System (1; 1') nach einem der vorhergehenden Ansprüche, wobei das mikrofluidische System (1; 1') zum Untersuchen der biologischen Probe verwendbar ist, welche in Form der Probenflüssigkeit (27) zu jedem Element des Arrays von Reaktionsbereichen (26) bereitgestellt wird.

7. Mikrofluidisches System (1; 1') nach einem der vorhergehenden Ansprüche, wobei der Einlass (23) und/oder der Auslass (24) in Form eines Verbindungsanschlusses zur Verbindung der Mikrofluidikvorrichtung (2) mit der Probenflüssigkeitsquelle, zur Verbindung der Mikrofluidikvorrichtung (2) mit der Primärabdichtungsflüssigkeitsquelle und/oder zur Verbindung der Mikrofluidikvorrichtung (2) mit der Sekundärabdichtungsflüssigkeitsquelle (4) ausgeführt ist/sind.

8. Mikrofluidisches System (1; 1') nach einem der vorhergehenden Ansprüche, wobei die Mikrofluidikvorrichtung (2) aus mindestens einer unteren Schicht (21) und einer oberen Schicht (22) aufgebaut ist, wobei entweder die untere Schicht (21) oder die obere Schicht (22) die Anordnung von Reaktionsbereichen (26), den Einlass (23) und den Auslass (24) bereitstellt, und wobei der Strömungskanal (25) zwischen der unteren Schicht (21) und der oberen Schicht (22) eingerichtet ist und in Fluidverbindung mit der Anordnung von Reaktionsbereichen (26) steht, wobei jeder Reaktionsbereich vorzugsweise ein Mikrowell oder ein Nanowell ist, wobei die Mikrofluidikvorrichtung (2) weiter vorzugsweise ein Mikrofluidikchip ist.

9. Mikrofluidisches System (1; 1') nach einem der vorhergehenden Ansprüche, wobei das mikrofluidische System (1; 1') so gestaltet ist, dass es zunächst die Probenflüssigkeit (27) durch den Strömungskanal (25) in die Anordnung von Reaktionsbereichen (26) strömt, und wobei das mikrofluidische System (1; 1') so gestaltet ist, dass es die initiale Abdichtungsflüssigkeit (28) in den Strömungskanal (25) der Mikrofluidikvorrichtung (2) strömt, nachdem die Probenflüssigkeit (27) der Anordnung von Reaktionsbereichen (26) zugeführt wurde.

10. Mikrofluidisches System (1; 1') nach einem der vorhergehenden Ansprüche, wobei das mikrofluidische System (1; 1') ferner eine Erfassungseinrichtung zum Erfassen des Vorhandenseins oder des Entstehens von Gasblasen in der Mikrofluidikvorrichtung (2) umfasst, wobei die Erfassungseinrichtung vorzugsweise eine optische Abbildungsvorrichtung, weiter vorzugsweise eine optische Kamera ist.

11. Mikrofluidisches System (1; 1') nach einem der vorhergehenden Ansprüche, wobei das mikrofluidische System (1; 1') weiterhin eine Thermohalterung zur Aufnahme der Mikrofluidikvorrichtung (2) aufweist, um die Anordnung von Reaktionsbereichen (26) mit einem Thermocycling-Temperaturprofil zu beaufschlagen.

12. Mikrofluidisches System (1; 1') nach einem der Ansprüche 1 bis 10, wobei ein Beaufschlagen mit einem Thermocycling-Temperaturprofil für die Anordnung von Reaktionsbereichen (26) mittels einer Heiz- und/oder Kühleinrichtung zum Erwärmen und/oder Abkühlen der Abdichtungsflüssigkeitstemperatur auf eine gewünschte Thermocycling-Temperaturprofiltemperatur umgesetzt wird, und wobei
die Sekundärabdichtungsflüssigkeitsquelle (4) ein Reservoir (42) mit nicht erwärmter zusätzlicher Abdichtungsflüssigkeit (29) umfasst, wobei stromabwärts des Reservoirs (42) eine Durchflussheizeinrichtung (5) angeordnet ist, um die zusätzliche Abdichtungsflüssigkeit (29) bei Bedarf zu erwärmen; und/oder
die Sekundärabdichtungsflüssigkeitsquelle (4) mindestens ein Reservoir (41) mit erwärmter zusätzlicher Abdichtungsflüssigkeit (29) und mindestens ein Reservoir (42) mit nicht erwärmter oder gekühlter zusätzlicher Abdichtungsflüssigkeit (29) umfasst, wobei die Reservoire (41, 42) durch einen Ventilmechanismus (411, 421), wie zum Beispiel ein jeweiliges elektronisch gesteuertes Abgabeventil (411, 421) oder ein gemeinsames Mischventil trennbar mit dem Strömungskreislauf (3) verbunden sind; und/oder
die zusätzliche Abdichtungsflüssigkeit (29) elektrisch leitfähiges Material, wie zum Beispiel Graphenmaterial umfasst, um die zusätzliche Abdichtungsflüssigkeit (29) durch das Anlegen von Elektrizität an die zusätzliche Abdichtungsflüssigkeit bei Bedarf zu erwärmen.

13. Mikrofluidisches System (1; 1') nach einem der vorhergehenden Ansprüche, wobei das mikrofluidische System (1; 1') ferner eine Druckkammer umfasst, die zumindest die Mikrofluidikvorrichtung (2) umgibt.

14. Verfahren zur digitalen Polymerase-Kettenreaktion dPCR einer biologischen Probe in einem mikrofluidischen System (1; 1') nach einem der vorhergehenden Ansprüche, wobei das Verfahren Folgendes umfasst:
einen Schritt des Strömens einer Probenflüssigkeit (27) durch den Strömungskanal (25) der Mikrofluidikvorrichtung (2), die insbesondere in Form eines mikrofluidischen Chips vorgesehen sein kann, und des sukzessiven Füllens der Anordnung von Reaktionsbereichen (26) mit der Probenflüssigkeit (27) durch Hindurchdrücken der Probenflüssigkeit (27) durch den Strömungskanal (25);
einen Schritt des Strömens einer initialen Abdichtungsflüssigkeit (28) durch den Strömungskanal (25) der Mikrofluidikvorrichtung (2) zum Versiegeln jedes Reaktionsbereichs der Anordnung von Reaktionsbereichen (26), nachdem derselbe mit der Probenflüssigkeit (27) gefüllt wurde, und zum Herausdrücken der restlichen Probenflüssigkeit (27) aus der Mikrofluidikvorrichtung (2),
einen Schritt des Beaufschlagens der Anordnung von Reaktionsbereichen (26) mit einem Thermocycling-Temperaturprofil, und
einen Schritt des Pumpens von zusätzlicher Abdichtungsflüssigkeit (29) durch den Strömungskanal (25) der Mikrofluidikvorrichtung (2), um Gasblasen aus dem Strömungskanal (25) zu spülen.

15. Verfahren nach Anspruch 14, wobei der Schritt des Pumpens von zusätzlicher Abdichtungsflüssigkeit (29) durch den Strömungskanal (25) das Pumpen einer vorbestimmten Menge an zusätzlicher Abdichtungsflüssigkeit (29) durch den Strömungskanal (25) nach Bedarf umfasst, wobei der Schritt des Pumpens von zusätzlicher Abdichtungsflüssigkeit (29) durch den Strömungskanal (25) vorzugsweise ein Schritt des konstanten Pumpens von zusätzlicher Abdichtungsflüssigkeit (29) durch den Strömungskanal (25) oder ein Schritt des intermittierenden Pumpens von zusätzlicher Abdichtungsflüssigkeit (29) durch den Strömungskanal (25) und/oder ein Schritt des Pumpens von zusätzlicher Abdichtungsflüssigkeit (29) durch den Strömungskanal (25) bei Erfassung von Gasblasen im Strömungskanal (25) ist.

16. Verfahren nach Anspruch 14 oder 15, wobei das Verfahren ferner Folgendes umfasst:
einen Schritt des Überwachens und Erfassens des Vorhandenseins oder des Entstehens von Gasblasen in der Mikrofluidikvorrichtung (2), vorzugsweise mittels einer Erfassungseinrichtung, wie einer optischen Abbildungsvorrichtung, zum Beispiel einer optischen Kamera; und/oder
einen Schritt zum Abtrennen von Gasblasen aus der zusätzlichen Abdichtungsflüssigkeit (29), vorzugsweise mittels einer Blasenfalle (32), welche mit dem Strömungskreislauf (3) stromabwärts des Auslasses (24) der Mikrofluidikvorrichtung (2) verbunden ist; und/oder
einen Schritt des Beafuschlagens von Druck auf die Mikrofluidikvorrichtung (2), vorzugsweise mittels einer zumindest die Mikrofluidikvorrichtung (2) umgebenden Druckkammer; und/oder
einen Schritt zum Überprüfen der biologischen Probe, welche in der Anordnung von Reaktionsbereichen (26) bereitgestellt wird.

17. Verfahren nach einem der Ansprüche 14 bis 16, wobei der Schritt des Beaufschlagens eines Thermocycling-Temperaturprofils auf die Anordnung von Reaktionsbereichen (26) Folgendes umfasst:
einen Schritt der Steuerung des Temperaturprofils einer die Mikrofluidikvorrichtung (2) aufnehmenden Thermohalterung, um die Anordnung von Reaktionsbereichen (26) mit einem Thermocycling-Temperaturprofil zu beaufschlagen; oder
einen Schritt der Steuerung einer Heiz- und/oder Kühleinrichtung zum Erwärmen und/oder Kühlen der Temperatur der Abdichtungsflüssigkeit auf eine gewünschte Thermocycling-Temperaturprofil-Temperatur.

18. Verfahren nach Anspruch 17, wobei der Schritt der Steuerung einer Heiz- und/oder Kühleinrichtung (5) Folgendes umfasst:
einen Schritt zum Steuern einer stromabwärts der Sekundärabdichtungsflüssigkeitsquelle (4) angeordneten Durchflussheizeinrichtung (5) zum Erwärmen der zusätzlichen Abdichtungsflüssigkeit (29) nach Bedarf; und/oder
einen Schritt zum Steuern eines Ventilmechanismus (411, 421) zum Mischen von zusätzlicher Abdichtungsflüssigkeit (29) aus mindestens einem Reservoir (41) mit einer erwärmten zusätzlichen Abdichtungsflüssigkeit (29) und mindestens einem Reservoir (42) mit einer nicht erwärmten oder gekühlten zusätzlichen Abdichtungsflüssigkeit (29); und/oder
einen Schritt des Anlegens von Elektrizität an die zusätzliche Abdichtungsflüssigkeit (29) nach Bedarf, wobei die zusätzliche Abdichtungsflüssigkeit (29) elektrisch leitendes Material, wie zum Beispiel Graphenmaterial zum Erwärmen der zusätzlichen Abdichtungsflüssigkeit (29) durch das Anlegen von Elektrizität umfasst.

## Revendications

1. Système microfluidique (1 ; 1') destiné à des réactions numériques en chaîne par polymérase dPCR d'un échantillon biologique, le système microfluidique (1 ; 1') comprenant :
au moins un dispositif microfluidique (2) qui possède une entrée (23), une sortie (24), un canal d'écoulement (25) qui relie l'entrée (23) à la sortie (24) et un réseau de zones de réactions (26) mises en communication par fluide avec le canal d'écoulement (25) ;
un circuit d'écoulement (3) qui peut être raccordé au dispositif microfluidique (2) pour l'écoulement d'un liquide à travers le canal d'écoulement (25) du dispositif microfluidique (2) ;
une source de liquide échantillon qui peut être raccordée au dispositif microfluidique (2) dans le but d'alimenter le dispositif microfluidique (2) avec un liquide échantillon (27) ;
une source de liquide d'étanchéisation primaire qui peut être raccordée au dispositif microfluidique (2) dans le but d'alimenter le dispositif microfluidique (2) avec un liquide d'étanchéisation initial (28) pour l'étanchéisation du liquide échantillon (25) à l'intérieur du réseau des zones de réactions (26) ;
une source de liquide d'étanchéisation secondaire (4) qui peut être raccordée au dispositif microfluidique (2) dans le but d'alimenter le dispositif microfluidique (2) avec un liquide d'étanchéisation supplémentaire (29) ; et
un moyen de pompage (31) relié au circuit d'écoulement (3) et conçu pour pomper ledit liquide d'étanchéisation supplémentaire (29) à travers le canal d'écoulement (25) ;
**caractérisé en ce que** le système microfluidique comprend en outre une unité de commande qui est configurée pour la commande du moyen de pompage (31) dans le but de pomper ledit liquide d'étanchéisation supplémentaire (29) à travers le canal d'écoulement (25) à la demande, à des fins d'évacuation des bulles de gaz à l'extérieur du canal d'écoulement (25).

2. Système microfluidique (1 ; 1') selon la revendication 1, dans lequel le liquide échantillon (27) représente une solution aqueuse qui comprend ledit échantillon biologique et des réactifs qui sont requis pour le test dPCR ; et dans lequel l'un quelconque des liquides d'étanchéisation (28, 29) représente un liquide d'étanchéisation choisi parmi un liquide huileux et un liquide polymère, tel qu'un liquide à base de silicone, ou un de leurs mélanges, pour faire de cette manière du liquide d'étanchéisation (28, 29) un liquide non miscible ; de préférence dans lequel le liquide d'étanchéisation initial (28) et le liquide d'étanchéisation supplémentaire (29) sont constitués de la même matière de liquide d'étanchéisation.

3. Système microfluidique (1 ; 1') selon la revendication 1 ou 2, dans lequel la source de liquide d'étanchéisation primaire et la source de liquide d'étanchéisation secondaire (4) sont réalisées à l'intervention de différents réservoirs de liquides d'étanchéisation ou par l'intermédiaire d'un réservoir de liquide d'étanchéisation commun ; de préférence, dans lequel le liquide d'étanchéisation initial (28) représente un liquide d'étanchéisation non tempéré.

4. Système microfluidique (1 ; 1') selon l'une quelconque des revendications précédentes, dans lequel le moyen de pompage (31) est commandé pour pomper une quantité prédéterminée dudit liquide d'étanchéisation supplémentaire (29) à travers le canal d'écoulement (25) ; de préférence, dans lequel le moyen de pompage (31) est commandé pour pomper ledit liquide d'étanchéisation supplémentaire (29) à travers le canal d'écoulement (25) de manière constante, par intermittence ou lors de la détection de bulles de gaz dans le canal d'écoulement (25).

5. Système microfluidique (1 ; 1') selon l'une quelconque des revendications précédentes, dans lequel le système microfluidique (1 ; 1') comprend en outre un piège à bulles (32) qui est relié au circuit d'écoulement (3), pour la séparation du gaz par rapport au liquide d'étanchéisation (28, 29), le piège à bulles (32) étant disposé en aval par rapport à la sortie (24) du dispositif microfluidique (2).

6. Système microfluidique (1 ; 1') selon l'une quelconque des revendications précédentes, dans lequel le système microfluidique (1 ; 1') peut être utilisé pour l'analyse dudit échantillon biologique qui alimente sous la forme dudit liquide échantillon (27) chaque élément du réseau des zones de réactions (26).

7. Système microfluidique (1 ; 1') selon l'une quelconque des revendications précédentes, dans lequel l'entrée (23) et/ou la sortie (24) est/sont réalisée(s) sous la forme d'un orifice de raccordement à des fins de raccordement du dispositif microfluidique (2) à la source de liquide échantillon, à des fins de raccordement du dispositif microfluidique (2) à la source de liquide d'étanchéisation primaire, et/ou à des fins de raccordement du dispositif microfluidique (2) à la source de liquide d'étanchéisation secondaire.

8. Système microfluidique (1 ; 1') selon l'une quelconque des revendications précédentes, dans lequel le dispositif microfluidique (2) présente une structure qui comprend au moins une couche inférieure (21) et une couche supérieure (22) ; dans lequel, soit la couche inférieure (21), soit la couche supérieure (22) procure le réseau des zones de réactions (26), l'entrée (23) et la sortie (24) ; et dans lequel le canal d'écoulement (25) est établi entre ladite couche inférieure (21) et ladite couche supérieure (22) et est mis en communication par fluide avec le réseau des zones de réactions (26) ; de préférence dans lequel chaque zone de réactions représente un micropuits ou un nanopuits ; de manière plus préférée dans lequel le dispositif microfluidique (2) représente une puce microfluidique.

9. Système microfluidique (1 ; 1') selon l'une quelconque des revendications précédentes, dans lequel le système microfluidique (1 ; 1') est configuré pour dans un premier temps diffuser le liquide échantillon (27) à travers le canal d'écoulement (25) jusque dans le réseau des zones de réactions (26) ; et dans lequel le système microfluidique (1 ; 1') est configuré pour diffuser le liquide d'étanchéisation initial (28) jusque dans le canal d'écoulement (25) du dispositif microfluidique (2) après l'alimentation du réseau des zones de réactions (26) avec le liquide échantillon (27).

10. Système microfluidique (1 ; 1') selon l'une quelconque des revendications précédentes, dans lequel le système microfluidique (1 ; 1') comprend en outre un moyen de détection pour la détection de la présence ou de la génération de bulles de gaz dans le dispositif microfluidique (2) ; de préférence dans lequel le moyen de détection représente un dispositif d'imagerie optique ; de manière plus préférée une caméra optique.

11. Système microfluidique (1 ; 1') selon l'une quelconque des revendications précédentes, dans lequel le système microfluidique (1 ; 1') comprend en outre un support thermique dans lequel vient se loger le dispositif microfluidique (2), dans le but de fournir un profil de température de thermocyclage au réseau des zones de réactions (26).

12. Système microfluidique (1 ; 1') selon l'une quelconque des revendications 1 à 10, dans lequel une fourniture d'un profil de température de thermocyclage au réseau des zones de réactions (26) est mise en œuvre par l'intermédiaire d'un moyen de chauffage et/ou de refroidissement destiné au chauffage et/ou refroidissement de la température du liquide d'étanchéisation pour atteindre un profil de température de thermocyclage désiré ; et dans lequel la source de liquide d'étanchéisation secondaire (4) comprend un réservoir (42) qui comprend un liquide d'étanchéisation supplémentaire non chauffé (29) ; dans lequel on prévoit un moyen de chauffage (5) du type à écoulement en aval du réservoir (42) pour le chauffage du liquide d'étanchéisation supplémentaire (29) à la demande ; et/ou
la source de liquide d'étanchéisation secondaire (4) comprend au moins un réservoir (41) qui comprend un liquide chauffé d'étanchéisation supplémentaire (29) et au moins un réservoir (42) qui comprend un liquide d'étanchéisation supplémentaire non chauffé ou refroidi (29), lesdits réservoirs (41, 42) étant reliés de manière séparée au circuit d'écoulement (3) par l'intermédiaire d'un mécanisme de vanne (411, 421) tel qu'une vanne de distribution respective (411, 421) du type à commande électronique ou une vanne mélangeuse commune ; et/ou
le liquide d'étanchéisation supplémentaire (29) comprend un matériau électroconducteur, tel qu'un matériau à base de graphène, destiné à chauffer le liquide d'étanchéisation supplémentaire (29) via l'approvisionnement d'électricité au liquide d'étanchéisation supplémentaire, à la demande.

13. Système microfluidique (1 ; 1') selon l'une quelconque des revendications précédentes, dans lequel le système microfluidique (1 ; 1') comprend en outre une chambre de pression qui entoure au moins le dispositif microfluidique (2).

14. Procédé destiné à des réactions numériques en chaîne par polymérase dPCR d'un échantillon biologique dans un système microfluidique (1 ; 1') selon l'une quelconque des revendications précédentes, le procédé comprenant :
une étape de diffusion d'un liquide échantillon (27) à travers le canal d'écoulement (25) du dispositif microfluidique (2), en particulier fourni sous la forme d'une puce microfluidique, et de remplissage du réseau de zones de réactions (26) avec le liquide échantillon (27) d'une manière successive en poussant le liquide échantillon (27) à travers à travers le canal d'écoulement (25) ;
une étape de diffusion d'un liquide d'étanchéisation initial (28) à travers le canal d'écoulement (25) du dispositif microfluidique (2) à des fins d'étanchéisation de chaque zone de réactions du réseau des zones de réactions (26) après le remplissage desdites zones avec le liquide échantillon (27), et à des fins de poussée du liquide échantillon restant (27) à l'extérieur du dispositif microfluidique (2) ;
une étape d'application d'un profil de température de thermocyclage au réseau des zones de réactions (26) ; et
une étape de pompage d'un liquide d'étanchéisation supplémentaire (29) à travers le canal d'écoulement (25) du dispositif microfluidique (2), dans le but d'évacuer les bulles de gaz à l'extérieur du canal d'écoulement (25).

15. Procédé selon la revendication 14, dans lequel l'étape de pompage d'un liquide d'étanchéisation supplémentaire (29) à travers le canal d'écoulement (25) comprend le fait de pomper une quantité prédéterminée du liquide d'étanchéisation supplémentaire (29) à travers le canal d'écoulement (25), à la demande ; de préférence dans lequel l'étape de pompage d'un liquide d'étanchéisation supplémentaire (29) à travers le canal d'écoulement (25) représente une étape de pompage d'un liquide d'étanchéisation supplémentaire (29) à travers le canal d'écoulement (25) d'une manière constante ou bien une étape de pompage d'un liquide d'étanchéisation supplémentaire (29) à travers le canal d'écoulement (25) d'une manière intermittente et/ou une étape de pompage d'un liquide d'étanchéisation supplémentaire (29) à travers le canal d'écoulement (25) lors de la détection de bulles de gaz dans le canal d'écoulement (25).

16. Procédé selon la revendication 14 ou 15, dans lequel le procédé comprend en outre :
une étape de surveillance et de détection de la présence ou de la génération de bulles de gaz dans le dispositif microfluidique (2), de préférence par l'intermédiaire d'un moyen de détection, tel qu'un dispositif d'imagerie optique, par exemple une caméra optique ; et/ou
une étape de séparation des bulles de gaz par rapport au liquide d'étanchéisation supplémentaire (29), de préférence au moyen d'un piège à bulles (32) qui est relié au circuit d'écoulement (3) en aval de la sortie (24) du dispositif microfluidique (2) ; et/ou
une étape d'application d'une pression sur le dispositif microfluidique (2), de préférence par l'intermédiaire d'une chambre de pression qui entoure au moins le dispositif microfluidique (2) ; et/ou
une étape d'analyse de l'échantillon biologique fourni dans le réseau des zones de réactions (26).

17. Procédé selon l'une quelconque des revendications 14 à 16, dans lequel l'étape d'application d'un profil de température de thermocyclage au réseau des zones de réactions (26) comprend :
une étape de réglage du profil de température d'un support thermique dans lequel vient se loger le dispositif microfluidique (2), dans le but de procurer un profil de température de thermocyclage au réseau des zones de réactions (26) ; ou
une étape de commande d'un moyen de chauffage et/ou de refroidissement pour le chauffage et/ou le refroidissement de la température du liquide d'étanchéisation afin d'obtenir une température désirée du profil de température de thermocyclage.

18. Procédé selon la revendication 17, dans lequel l'étape de commande d'un moyen de chauffage et/ou de refroidissement (5) comprend :
une étape de commande d'un moyen de chauffage du type à écoulement (5) qui est prévu en aval de la source de liquide d'étanchéisation secondaire (4), destiné à chauffer le liquide d'étanchéisation supplémentaire (29), à la demande ; et/ou
une étape de commande d'un mécanisme de vanne (411, 421) destiné à mélanger le liquide d'étanchéisation supplémentaire (29) issu d'au moins un réservoir (41) comprenant un liquide d'étanchéisation supplémentaire chauffé (29) et d'au moins un réservoir (42) comprenant un liquide d'étanchéisation supplémentaire (29) non chauffé ou refroidi ; et/ou
une étape d'application d'électricité au liquide d'étanchéisation supplémentaire (29), à la demande, le liquide d'étanchéisation supplémentaire (29) comprenant un matériau électroconducteur, tel qu'un matériau à base de graphène, dans le but de chauffer le liquide d'étanchéisation supplémentaire (29) via l'approvisionnement d'électricité.
